(19) Europäisches Patentamt
European Patent Office
Office européen des brevets

(11) EP 3 330 314 B1

(12) EUROPEAN PATENT SPECIFICATION

(45) Date of publication and mention of the grant of the patent:
**01.05.2024 Bulletin 2024/18**

(21) Application number: **17210231.1**

(22) Date of filing: **22.07.2011**

(51) International Patent Classification (IPC):
***C08L 23/08*** *(2006.01)* ***C08F 2/00*** *(2006.01)*
***C08F 210/16*** *(2006.01)*

(52) Cooperative Patent Classification (CPC):
(C-Sets available)
**C08F 2/001; C08F 210/16; C08L 23/0815;**
C08F 4/65916; C08L 2205/025; C08L 2666/06

(Cont.)

# (54) POLYETHYLENE COMPOSITION

POLYETHYLENZUSAMMENSETZUNG

COMPOSITION DE POLYÉTHYLÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.07.2010 EP 10170571**

(43) Date of publication of application:
**06.06.2018 Bulletin 2018/23**

(62) Document number(s) of the earlier application(s) in accordance with Art. 76 EPC:
**11736091.7 / 2 596 059**

(73) Proprietor: **Ineos Europe AG**
**1180 Rolle (Vaud) (CH)**

(72) Inventors:
- **DHEUR, Luc**
  **B-1200 Brussels (BE)**
- **KOCH, Benoit**
  **B-4280 Hannut (BE)**
- **SPITZMESSER, Stefan**
  **B-1200 Brussels (BE)**

(74) Representative: **Smith, Julian Philip Howard**
**Mathisen & Macara LLP**
**Charta House**
**30-38 Church Street**
**Staines-upon-Thames, Middlesex TW18 4EP (GB)**

(56) References cited:
**EP-A1- 0 528 523**
**EP-A1- 0 898 586**
**EP-A1- 0 989 141**
**EP-A1- 1 359 192**
**EP-A1- 2 033 976**
**WO-A1-2012/010690**
**WO-A2-2006/065651**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 210/16, C08F 2/001;**
**C08F 210/16, C08F 4/6592;**
**C08L 23/0815, C08L 23/0815, C08L 2205/025, C08L 2666/06;**
C08F 210/16, C08F 210/14, C08F 2500/04, C08F 2500/07, C08F 2500/12, C08F 2500/17, C08F 2500/27, C08F 2500/30

## Description

The present invention relates to a polyethylene composition.

Polyethylene compositions comprising two or more polyethylene fractions with different molecular weight are often referred to as bimodal or multimodal polyethylene compositions. Such polyethylene compositions are frequently used for the production of pipes due to their favourable physical and chemical properties, in particular mechanical strength, corrosion resistance and long-term stability. When considering that the fluids, such as water or natural gas, transported in a pipe often are pressurized and have varying temperatures, usually within a range of 0°C to 50°C, it is obvious that the polyethylene composition used for pipes must meet demanding requirements. On the other hand, to facilitate installation of the pipes e.g. into the ground, a high flexibility of the pipes is desired.

In particular, the polyethylene composition used for a pipe should have high mechanical strength, good long-term stability, notch/creep resistance and crack propagation resistance, and, at the same time high flexibility. However, at least some of these properties are contrary to each other so that it is difficult to provide a composition for pipes which excels in all of these properties simultaneously. For example, stiffness imparting mechanical strength to the pipe is known to improve with higher density but, in contrast, flexibility and stresscrack resistance is known to improve with reduced density.

Furthermore, as polymer pipes generally are manufactured by extrusion, or, to a smaller extent, by injection moulding, the polyethylene composition also must have good processability.

Polyethylene pipes are widely used for conveying fluids under pressure, such as gas or water. However unless they are reinforced, they have limited hydrostatic resistance due to the inherent low yield strength of polyethylene. It is generally accepted that the higher the density of the polyethylene, the higher will be the long-term hydrostatic strength (LTHS). LTHS is one of the properties utilised to classify pressure pipe resins according to ISO 9080 and ISO 12162, and represents the predicted mean strength in MPa at a given temperature T (20°C, for example) and time t (50 years, for example).. Under this classification, commercial pipe polyethylenes are often classified by the names "PE 80" or "PE 100". In order to be labelled as such, polyethylenes must have an extrapolated 20°C J 50 years stress at a lower prediction level (97.5% confidence level - "LPL") according to ISO 9080 of at least 8 MPa [for PE 80] or 10 MPa [for PE 100]. These ratings clearly indicate excellent long-term hydrostatic strength. They are sometimes referred to as an MRS ("minimum required strength") rating, where MRS 8 = 8 MPa = "PE 80", and MRS 10 = 10 MPa = "PE 100".

Certain bimodal polyethylene resins are known to have very good hydrostatic strength. For example, WO 02/34829 discloses a polyethylene resin comprising from 35 to 49 wt% of a first polyethylene fraction of high molecular weight and from 51 to 65 wt% of a second polyethylene fraction of low molecular weight, the first polyethylene fraction comprising a linear low density polyethylene having a density of up to 928 kg/m$^3$, and an HLMI of less than 0.6 g/lOmin and the second polyethylene fraction comprising a high density polyethylene having a density of at least 969 kg/m$^3$ and an $MI_2$ of greater than 100 g/10min, and the polyethylene resin having a density of greater than 951 kg/m$^3$ and an HLMI of from 1 to 100 g/10min

It is known that in order to comply with the various different requirements for a pipe material, bimodal polyethylene compositions may be used. Such compositions are described e.g. in EP 0739937 and WO 02/102891. The bimodal polyethylene compositions described in these documents usually comprise two polyethylene fractions, wherein one of these two fractions has a lower molecular weight than the other fraction and is preferably a homopolymer, the other fraction with higher molecular weight preferably being an ethylene copolymer comprising one or more alpha-olefin comonomers.

One significant disadvantage of such pipes when used for gas or cold water infrastructure is the lack of flexibility of the pipes. The pipes are rigid and strong, as a result of the high demands regarding mechanical strength and long-term stability. However when laying gas or cold water pipes, for example in open-trench laying or trenchless laying technologies like plough-in-place laying, problems often occur due to the stiffness of the pipes. It is often difficult to align and manoeuvre the pipes into the trenches, and to straighten pipes which are stored or transported as coils. The same problem occurs if bends are required. All these problems are of course even more relevant when the stiffness of the pipes increases due to lower temperature, for example in cold weather.

There is thus a need for a pipe which has both excellent long-term hydrostatic strength as well as good flexibility. However it is well known that whilst the hydrostatic strength of a given polyethylene increases with increasing density, the flexibility of a given polyethylene decreases with increasing density. Finding a satisfactory balance of these two properties is therefore difficult.

EP 1909013A discloses a polyethylene composition which is said to have enhanced flexibility and simultaneously high mechanical strength and good long-term stability, and which has an $MFR_5$ of 0. 1 to 0.5 g/10 min, a shear thinning index (2.7/210) of 10 to 49, and comprises a base resin having a density of 940-947 kg/m$^3$ which is formed of two ethylene homo- or copolymer fractions.

A further important requirement of polyethylene resins is processability, ie the ability to be processed into the desired article, which generally relates to the properties of the polymer when molten. Clearly a polyethylene having not

only good flexibility, high mechanical strength and good long-term stability but also good processability would be extremely desirable.

WO 2006/022918 discloses a PE100 rated bimodal polyethylene composition having a density above 940 and a high load melt index (HLMI) of 5 -12, in which the molecular weight of the low molecular weight component is particularly low (which results in a very high melt index for the LMW component). A disadvantage of compositions containing a very low molecular weight component is that the content of oligomers and volatile components in the polymer is relatively high, which can be disadvantageous during processing, and can also prevent the composition from being used in applications where good organoleptic properties are required (eg pipes for potable water).

We have found a polyethylene which has a good balance of flexibility, mechanical strength and processability. Accordingly the present invention provides a polyethylene composition comprising

(a) 40-55wt% of a copolymer fraction (A) having a density of 960 - 975 kg/m$^3$ and comprising ethylene and a $C_4$-$C_{10}$ alpha-olefin,
(b) 45-60wt% of a copolymer fraction (B) comprising ethylene and a $C_4$-$C_{10}$ alpha-olefin,

wherein the composition has an unpigmented density of 942 to 954 kg/m$^3$ and an $MI_5$ of 0.1 to 1 g/10 min, wherein the composition has a substantially uniform or reverse comonomer distribution in one or both of fractions (A) and (B).

It is preferred that the copolymer fraction (A) has an $MI_2$ of from greater than 300 to 800 g/10min, and/or that copolymer fraction (A) has a weight average molecular weight Mw of from 15 to 35 kDa.

In addition to fractions (A) and (B), the composition of the invention may optionally comprise up to 10 wt%, more preferably up to 5 wt% of other components such as a prepolymer or the usual additives for utilisation with polyolefins. Such additives include pigments, stabilizers (antioxidant agents), antacids and/or anti-UVs, antistatic agents, processing aids and nucleating agents.

The amount of any nucleating agent present in the composition is preferably 0.01 to 0.5 wt%. The nucleating agent may be any compound or mixture of compounds capable of nucleating the crystallization, such as a pigment having a nucleating effect or an additive used only for nucleating purposes.

The polyethylene composition preferably has an $MI_5$ of 0.1 to 0.8 g/10 min, more preferably 0.2 to 0.7 g/10 min, and most preferably from 0.3 to 0.6 g/10min.

By "unpigmented density" is meant the density of the pure polymer before the addition of any additives such as pigments. All densities referred to hereinafter are unpigmented densities. The polyethylene composition preferably has a density of 943-952 kg/m$^3$. Particularly preferred densities are between 945 and 950 kg/m$^3$. The density may also be above 947 kg/m$^3$, preferably 948-954 kg/m$^3$.

The amount of copolymer (A) is preferably from 45 to 55wt%, more preferably from greater than 47 to 52wt%, and most preferably from 48 to 51wt%. The amount of copolymer (B) is preferably from 45 to 55wt%, more preferably from 48 to less than 53wt%, and most preferably from 49 to 52wt%.

Copolymer (A) preferably has an $MI_2$ of at least 320 g/10 min. A preferred range is 320-500 g/10min. When the composition is made in a two-reactor process with each of copolymers (A) and (B) being made in a separate reactor, in the case where copolymer (A) is made in the second reactor it may not be possible to determine its melt index directly. In such a case it is well known how to calculate the melt index of a polymer made in the second reactor using a composition law, typically of the general form $MI2(final) = [p1*MI2_A^{-K} + (1 - p1)*MI2_B^{-K}]^{(-1/K)}$, where k is determined empirically, for example by using blended compositions made in two separate reactors where the melt index can be measured directly. An example of such a law is described in "Prediction of melt flow rate (MFR) of bimodal polyethylenes based on MFR of their components", Bengt Hagström, Conference of Polymer Processing in Gothenburg, 19-21/08/1997. In some cases $MI_2$ may be too low to be conveniently measured: in these cases either $MI_5$ or high load melt index ($I_{21}$) is measured, and that value converted to an equivalent $MI_2$. Such conversion between different melt index measurements is familiar to the person skilled in the art.

Copolymer (A) of the preferably has a Mw of 20 to 30 kDa. When the composition is made in a two-reactor process with each of copolymers (A) and (B) being made in a separate reactor, in the case where copolymer (A) is made in the second reactor it may not be possible to determine its molecular weight directly. However the molecular weight Mw of the whole composition is simply a weighted average of the molecular weights of the individual components according to the relationship
$Mw(final) = p1 \cdot Mw(A) + (1 - p1) \cdot Mw(B)$, so it is easy to calculate for the copolymer made in the second reactor when it is known both for the copolymer made in the first reactor and also for the overall composition. Molecular weight is determined by GPC, as is described in the Examples below.

Copolymer (A) preferably has a density of 963-973 kg/m$^3$.

Copolymer (A) preferably contains at least 0.03mol%, more preferably at least 0. 1mol%, and still more preferably

at least 0.2mol% of at least one alpha-olefin comonomer. The amount of comonomer is preferably at most 2 mol%, more preferably at most 1.6mol%, and still more preferably at most 1.3mol%. The most preferred range of alpha-olefin is between 0.3 and 1 mol%. The alpha-olefin comonomer can be selected from olefinically unsaturated monomers comprising from 4 to 8 carbon atoms, such as, for example, 1-butene, 1-pentene, 3-methyl-1-butene, 3- and 4-methyl-1-pentenes, 1-hexene and 1-octene. Preferred alpha-olefins are 1-butene, 1-hexene and 1-octene and more particularly 1-hexene. The other alpha-olefin which may also be present additional to the $C_4$-$C_8$ alpha-olefin is preferably selected from olefinically unsaturated monomers comprising from 3 to 8 carbon atoms, such as, for example, propylene, 1-butene, 1-pentene, 3-methyl-1-butene, 3- and 4-methyl-1-pentenes, 1-hexene and 1-octene.

Copolymer (B) preferably contains at least 0.03mol%, more preferably at least 0. 1mol%, and still more preferably at least 0.2mol% of at least one alpha-olefin comonomer. The amount of comonomer is preferably at most 2 mol%, more preferably at most 1.6mol%, and still more preferably at most 1.3mol%. The most preferred range of alpha-olefin is between 0.3 and 1 mol%. The alpha-olefin comonomer can be selected from olefinically unsaturated monomers comprising from 4 to 8 carbon atoms, such as, for example, 1-butene, 1-pentene, 3-methyl-1-butene, 3- and 4-methyl-1-pentenes, 1-hexene and 1-octene. Preferred alpha-olefins are 1-butene, 1-hexene and 1-octene and more particularly 1-hexene. The other alpha-olefin which may also be present additional to the $C_4$-$C_8$ alpha-olefin is preferably selected from olefinically unsaturated monomers comprising from 3 to 8 carbon atoms, such as, for example, propylene, 1-butene, 1-pentene, 3-methyl-1-butene, 3- and 4-methyl-1-pentenes, 1-hexene and 1-octene.

Preferably at least one of the copolymers (A) and (B) has a molecular weight distribution Mw/Mn of 4 or less. This is determined by GPC as described in the Examples.

When the composition is made in a two-reactor process with each of copolymers (A) and (B) being made in a separate reactor, the properties of the copolymer made in the second reactor are chosen so as to ensure that the required properties of the final polymer are obtained.

When the composition is made in a two-reactor process with each of copolymers (A) and (B) being made in a separate reactor, the comonomer content of the copolymer made in the second reactor may be calculated if it is not possible to measure it directly. The comonomer content of the whole composition is simply a weighted average of the comonomer contents of the individual components, so it is easy to calculate the comonomer content of the copolymer made in the second reactor when that of the copolymer made in the first reactor and also the overall comonomer content is known.

It is not necessary that the comonomer content of both copolymers (A) and (B) is the same. The same comonomer may be used in both copolymers (A) and (B), although this is not essential.

For the purposes of the present invention, the $C_4$-$C_8$ alpha-olefin content of the copolymers (A) and (B) is measured by $^{13}C$ NMR according to the method described in J. C. Randall, JMS-Rev. Macromol. Chem. Phys., C29(2&3), p201-317 (1989), that is to say that the content of units derived from $C_4$-$C_8$ alpha-olefin is calculated from the measurements of the integrals of the lines characteristic of that particular $C_4$-$C_8$ alpha-olefin in comparison with the integral of the line characteristic of the units derived from ethylene (30 ppm).

The composition of the invention is characterised by a substantially uniform or reverse comonomer distribution in one or both of fractions (A) and (B). Reverse comonomer distribution is a specific comonomer content distribution in which the lower molecular weight fraction has the lower comonomer content and the higher molecular weight fraction has the proportionally higher comonomer content. This is reverse of the traditional Ziegler-Natta catalysed polymers wherein the lower the molecular weight of a copolymer fraction, the higher its comonomer content. A uniform comonomer distribution is defined as a comonomer distribution in which there is no increasing or decreasing trend across the full width of the molecular weight distribution of the polymer fraction. A uniform comonomer distribution may alternatively be defined as meaning that comonomer content of the polymer fractions across the molecular weight range of the particular fraction varies by less than 10wt%, preferably by less than 8wt%, more preferably by less than 5wt%, and most preferably by less than 2wt%.

The nature of the comonomer distribution can be determined by measuring comonomer content as a function of molecular weight. This can be done by coupling a Fourier transform infrared spectrometer (FTIR) to a Waters 1500C Gel Permeation Chromatograph (GPC). The setting up, calibration and operation of this system together with the method for data treatment has been described previously (L.J. Rose et al, "Characterisation of Polyethylene Copolymers by Coupled GPC/FTIR" in "Characterisation of Copolymers", Rapra Technology, Shawbury UK, 1995, ISBN 1-85957-048-86.). Further details can be found in our own EP 898585A.

One of the features of the present invention is that it is capable of providing compositions having good processability (eg. extrudability). A good measure of processability is viscosity at high shear stress, represented by $\eta_{210kPa}$, which is independent of molecular weight/melt index. The lower the viscosity the better the processability. It is preferred that the composition has an $\eta_{210kPa}$ of less than 6 kPa.s, preferably 2-6 kPa.s. By comparison Examples 1 and 2 of EP 1909013A have values of $\eta_{210kPa}$ exceeding 7 kPa.s.

The compositions of the invention also have a good balance between flexibility and mechanical strength. The compositions preferably have a flexural modulus of less than 1400 MPa. It is also preferred that the flexural modulus in

MPa is less than 25(D-900) where D is density in kg/m$^3$. Regarding mechanical strength, the compositions of the invention preferably have a long term hydrostatic strength (LTHS) rating of 10.5 or better. They also preferably have a notch pipe test result, performed according to ISO13479:1997 on 110 mm SDR 11 pipes at 80°C/9.2 bar, of 1000 hours or better, preferably 1 year (8760 hours) or better.

The compositions of the invention may be obtained by any known process. The two copolymer fractions (A) and (B) may be made in separate reactors and physically blended subsequently, but it is preferred that they are obtained by polymerising ethylene and alpha-olefin in a first reactor in order to form a first ethylene copolymer, and then in a second reactor polymerising ethylene plus an alpha-olefin in the presence of the first copolymer. All of these processes are preferably carried out as a suspension (slurry) polymerisation in the presence of a diluent.

The compositions of the invention are most preferably obtained by means of a process utilising at least two polymerisation reactors connected in series, according to which process:

- in a first reactor, ethylene and an alpha-olefin are polymerised in suspension in a medium comprising a diluent, a catalyst based on a transition metal and optionally hydrogen and/or a cocatalyst so as to form from 40 to 55% by weight with respect to the total weight of the composition of copolymer (A),
- the medium comprising copolymer (A) in addition is drawn off from the first reactor and optionally subjected to expansion so as to degas at least part of the hydrogen, after which
- said medium comprising copolymer (A), ethylene and another alpha-olefin (which may be the same or different as the first alpha-olefin) are introduced into a further reactor in which polymerisation, optionally in gas phase but preferably in suspension, is effected in order to form from 45 to 60% by weight with respect to the total weight of the composition of copolymer (B).

The compositions of the invention may alternatively be obtained by means of a process utilising at least two polymerisation reactors connected in series, according to which process:

- in a first reactor, ethylene and an alpha-olefin are polymerised in suspension in a medium comprising a diluent, a catalyst based on a transition metal and optionally hydrogen and/or a cocatalyst so as to form from 45 to 60% by weight with respect to the total weight of the composition of copolymer (B),
- the medium comprising copolymer (B) in addition is drawn off from the first reactor and optionally subjected to expansion so as to degas at least part of the hydrogen, after which
- said medium comprising copolymer (B), ethylene and another alpha-olefin (which may be the same or different as the first alpha-olefin) are introduced into a further reactor in which polymerization, optionally in suspension or gas phase(preferably gas phase), is effected in order to form from 40 to 55% by weight with respect to the total weight of the composition of copolymer (A).

Polymerisation in suspension means polymerisation in a diluent which is in the liquid or supercritical state in the polymerisation conditions (temperature, pressure) used, these polymerisation conditions or the diluent being such that at least 50% by weight (preferably at least 70%) of the polymer formed is insoluble in said diluent.

The diluent used in this polymerisation process is usually a hydrocarbon diluent, inert to the catalyst, to any cocatalyst and to the polymer formed, such for example as a linear or branched alkane or a cycloalkane, having from 3 to 8 carbon atoms, such as hexane or isobutane.

Optionally the main polymerisation stages may be preceded by a prepolymerisation, in which case up to 10 wt%, preferably 1 to 5 wt%, of the total base resin is produced. The prepolymer may be an ethylene homopolymer or copolymer, but is preferably an ethylene homopolymer (HDPE). In the prepolymerisation, preferably all of the catalyst is charged into a loop reactor and the prepolymerisation is performed as a slurry polymerisation. Such a prepolymerisation leads to less fine particles being produced in the following reactors and to a more homogeneous final product being obtained.

Following production of the composition of the invention in the above process, the polymer produced is usually subjected to a compounding step, in which the composition of the base resin comprising solely copolymers (A) and (B) is extruded in an extruder and then pelletised to produce pellets in a manner known in the art. Additives or other polymer components may be added to the composition during the compounding step in the amounts described previously.

The pellets are converted into articles such as pipes.

The polymerisation catalysts utilised to make the compositions of the invention, by whatever process, may include coordination catalysts of a transition metal, such as Ziegler-Natta (ZN), metallocenes, non-metallocenes, Cr-catalysts etc. The catalyst may be supported, e.g. with conventional supports including silica, Al-containing supports and magnesium dichloride based supports.

It is preferred that the compositions of the invention are made using a metallocene catalyst system, and the most preferred metallocene is that typically comprising a monocylcopentadienyl metallocene complex having a 'constrained geometry' configuration, together with a suitable activator. Examples of monocyclopentadienyl or substituted monocyclopentadienyl complexes suitable for use in the present invention are described in EP 416815, EP 418044, EP 420436 and EP 551277.

The use of monocylcopentadienyl metallocene catalysts to make the compositions of the invention may provide an advantageous combination of properties in film applications, as described in our copending applications WO 2006/085051 and WO 2008/074689.

Suitable complexes may be represented by the general formula:

$$CpMX_n$$

wherein Cp is a single cyclopentadienyl or substituted cyclopentadienyl group optionally covalently bonded to M through a substituent, M is a Group IVA metal bound in a $\eta^5$ bonding mode to the cyclopentadienyl or substituted cyclopentadienyl group, X each occurrence is hydride or a moiety selected from the group consisting of halo, alkyl, aryl, aryloxy, alkoxy, alkoxyalkyl, amidoalkyl, siloxyalkyl etc. having up to 20 non-hydrogen atoms and neutral Lewis base ligands having up to 20 non-hydrogen atoms or optionally one X together with Cp forms a metallocycle with M and n is dependent upon the valency of the metal.

Preferred monocyclopentadienyl complexes have the formula:

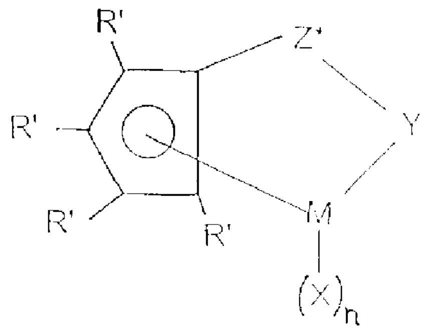

wherein:-

R' each occurrence is independently selected from hydrogen, hydrocarbyl, silyl, germyl, halo, cyano, and combinations thereof, said R' having up to 20 nonhydrogen atoms, and optionally, two R' groups (where R' is not hydrogen, halo or cyano) together form a divalent derivative thereof connected to adjacent positions of the cyclopentadienyl ring to form a fused ring structure;

X is hydride or a moiety selected from the group consisting of halo, alkyl, aryl, aryloxy, alkoxy, alkoxyalkyl, amidoalkyl, siloxyalkyl etc. having up to 20 non-hydrogen atoms and neutral Lewis base ligands having up to 20 non-hydrogen atoms,

Y is -O-, -S-, -NR*-, -PR*-,

M is hafnium, titanium or zirconium,

Z* is $SiR^*_2$, $CR^*_2$, $SiR^*_2SiR^*_2$, $CR^*_2CR^*_2$, $CR^*=CR^*$, $CR^*_2SiR^*_2$, or $GeR^*_2$, wherein:

R* each occurrence is independently hydrogen, or a member selected from hydrocarbyl, silyl, halogenated alkyl, halogenated aryl, and combinations thereof, said R* having up to 10 non-hydrogen atoms, and optionally, two R* groups from Z* (when R* is not hydrogen), or an R* group from Z* and an R* group from Y form a ring system, and n is 1 or 2 depending on the valence of M.

Examples of suitable monocyclopentadienyl complexes are (tert-butylamido) dimethyl (tetramethyl-$\eta^5$- cyclopentadienyl) silanetitanium dichloride and (2-methoxyphenylamido) dimethyl (tetramethyl--$\eta^5$- cyclopentadienyl) silanetitanium dichloride.

Particularly preferred metallocene complexes for use in the preparation of the copolymers of the present invention may be represented by the general formula:

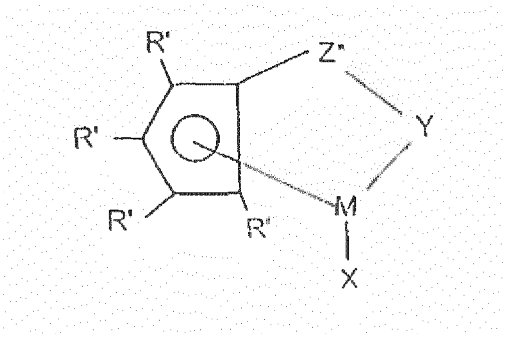

wherein:-

R' each occurrence is independently selected from hydrogen, hydrocarbyl, silyl, germyl, halo, cyano, and combinations thereof, said R' having up to 20 nonhydrogen atoms, and optionally, two R' groups (where R' is not hydrogen, halo or cyano) together form a divalent derivative thereof connected to adjacent positions of the cyclopentadienyl ring to form a fused ring structure;

X is a neutral $\eta^4$ bonded diene group having up to 30 non-hydrogen atoms, which forms a $\pi$-complex with M;
Y is -O-, -S-, -NR*-, -PR*-,
M is titanium or zirconium in the + 2 formal oxidation state;
Z* is $SiR^*_2$, $CR^*_2$, $SiR^*_2SIR^*_2$, $CR^*_2CR^*_2$, CR*=CR*, $CR^*_2SiR^*_2$, or
$GeR^*_2$, wherein:

R* each occurrence is independently hydrogen, or a member selected from hydrocarbyl, silyl, halogenated alkyl, halogenated aryl, and combinations thereof, said
R* having up to 10 non-hydrogen atoms, and optionally, two R* groups from Z* (when R* is not hydrogen), or an R* group from Z* and an R* group from Y form a ring system.

Examples of suitable X groups include s-trans-$\eta^4$-1,4-diphenyl-1,3-butadiene, s-trans-$\eta^4$-3-methyl-1,3-pentadiene; s-trans-$\eta^4$-2,4-hexadiene; s-trans-$\eta^4$-1,3-pentadiene; s-trans-$\eta^4$-1,4-ditolyl-1,3-butadiene; s-trans-$\eta^4$-1,4-bis(trimethylsilyl)-1,3-butadiene; s-cis-$\eta^4$-3-methyl-1,3-pentadiene; s-cis-$\eta^4$-1,4-dibenzyl-1,3-butadiene; s-cis-$\eta^4$-1,3-pentadiene; s-cis-$\eta^4$-1,4-bis(trimethylsilyl)-1,3-butadiene, said s-cis diene group forming a $\pi$-complex as defined herein with the metal.

Most preferably R' is hydrogen, methyl, ethyl, propyl, butyl, pentyl, hexyl, benzyl, or phenyl or 2 R' groups (except hydrogen) are linked together, the entire $C_5R'_4$ group thereby being, for example, an indenyl, tetrahydroindenyl, fluorenyl, terahydrofluorenyl, or octahydrofluorenyl group.

Highly preferred Y groups are nitrogen or phosphorus containing groups containing a group corresponding to the formula -N(R")- or -P(R")- wherein R" is $C_{1-10}$ hydrocarbyl.

Most preferred complexes are amidosilane - or amidoalkanediyl complexes.

Most preferred complexes are those wherein M is titanium.

Specific complexes are those disclosed in WO 95/00526 and are incorporated herein by reference.

A particularly preferred complex is (t-butylamido) (tetramethyl-$\eta^5$-cyclopentadienyl) dimethyl silanetitanium -$\eta^4$-1.3 -pentadiene.

Suitable cocatalysts for use in the preparation of the novel copolymers of the present invention are those typically used with the aforementioned metallocene complexes.

These include aluminoxanes such as methyl aluminoxane (MAO), boranes such as tris(pentafluorophenyl) borane and borates.

Aluminoxanes are well known in the art and preferably comprise oligomeric linear and/or cyclic alkyl aluminoxanes. Aluminoxanes may be prepared in a number of ways and preferably are prepare by contacting water and a trialkylaluminium compound, for example trimethylaluminium, in a suitable organic medium such as benzene or an aliphatic hydrocarbon.

A preferred aluminoxane is methyl aluminoxane (MAO).

Other suitable cocatalysts are organoboron compounds in particular triarylboron compounds. A particularly preferred triarylboron compound is tris(pentafluorophenyl) borane.

Other compounds suitable as cocatalysts are compounds which comprise a cation and an anion. The cation is typically a Bronsted acid capable of donating a proton and the anion is typically a compatible non-coordinating bulky species capable of stabilizing the cation.

Such cocatalysts may be represented by the formula:

$$(L^*\text{-}H)^+_d\ (A^{d-})$$

wherein:-

L* is a neutral Lewis base
$(L^*\text{-}H)^+_d$ is a Bronsted acid
$A^{d-}$ is a non-coordinating compatible anion having a charge of $d^-$, and
d is an integer from 1 to 3.

The cation of the ionic compound may be selected from the group consisting of acidic cations, carbonium cations, silylium cations, oxonium cations, organometallic cations and cationic oxidizing agents.

Suitably preferred cations include trihydrocarbyl substituted ammonium cations eg. triethylammonium, tripropylammonium, tri(n-butyl)ammonium and similar. Also suitable are N.N-dialkylanilinium cations such as N,N-dimethylanilinium cations.

The preferred ionic compounds used as cocatalysts are those wherein the cation of the ionic compound comprises a hydrocarbyl substituted ammonium salt and the anion comprises an aryl substituted borate.

Typical borates suitable as ionic compounds include:

triethylammonium tetraphenylborate
triethylammonium tetraphenylborate,
tripropylammonium tetraphenylborate,
tri(n-butyl)ammonium tetraphenylborate,
tri(t-butyl)ammonium tetraphenylborate,
N,N-dimethylanilinium tetraphenylborate,
N,N-diethylanilinium tetraphenylborate,
trimethylammonium tetrakis(pentafluorophenyl) borate,
triethylammonium tetrakis(pentafluorophenyl) borate,
tripropylammonium tetrakis(pentafluorophenyl) borate,
tri(n-butyl)ammonium tetrakis(pentafluorophenyl) borate,
N,N-dimethylanilinium tetrakis(pentafluorophenyl) borate,
N,N-diethylanilinium tetrakis(pentafluorophenyl) borate.

A preferred type of cocatalyst suitable for use with the metallocene complexes comprise ionic compounds comprising a cation and an anion wherein the anion has at least one substituent comprising a moiety having an active hydrogen.

Suitable cocatalysts of this type are described in WO 98/27119 the relevant portions of which are incorporated herein by reference.

Examples of this type of anion include:

triphenyl(hydroxyphenyl) borate
tri (p-tolyl)(hydroxyphenyl) borate
tris (pentafluorophenyl)(hydroxyphenyl) borate
tris (pentafluorophenyl)(4-hydroxyphenyl) borate

Examples of suitable cations for this type of cocatalyst include triethylammonium, triisopropylammonium, diethylmethylammonium, dibutylethylammonium and similar.

Particularly suitable are those cations having longer alkyl chains such as dihexyldecylmethylammonium, dioctadecylmethylammonium, ditetradecylmethylammonium, bis(hydrogenated tallow alkyl) methylammonium and similar.

Particular preferred cocatalysts of this type are alkylammonium tris(pentafluorophenyl) 4-(hydroxyphenyl) borates. A particularly preferred cocatalyst is bis(hydrogenated tallow alkyl) methyl ammonium tris (pentafluorophenyl) (4-hydroxyphenyl) borate.

With respect to this type of cocatalyst, a preferred compound is the reaction product of an alkylammonium tris(pentafluorophenyl)-4-(hydroxyphenyl) borate and an organometallic compound, for example a trialkylaluminium or an aluminoxane such as tetraisobutylaluminoxane. Suitable cocatalysts of this type are disclosed in WO 98/27119 and WO 99/28353. Preferred trialkylaluminium compounds are triethylaluminium or trimethylaluminium, the latter being particular preferred. The contact between the borate and the trialkylaluminium compound is typically performed in a suitable

solvent at room temperature, and more preferably at a temperature in the range -25$^{O}$C to 10$^{O}$C. Preferred solvents for the contact are aromatic solvents in particular toluene.

The catalysts used to prepare the novel copolymers of the present invention may suitably be supported.

Suitable support materials include inorganic metal oxides or alternatively polymeric supports may be used for example polyethylene, polypropylene, clays, zeolites, etc.

The most preferred support material for use with the supported catalysts according to the method of the present invention is silica having a median diameter (d50) from 20 to 70 $\mu$m, preferably from 30 to 60 $\mu$m. Particularly suitable supports of this type are Grace Davison D948 or Sylopol 2408 silicas as well as PQ Corporation ES70 or ES757 silicas.

The support material may be subjected to a heat treatment and/or chemical treatment to reduce the water content or the hydroxyl content of the support material. Typically chemical dehydration agents are reactive metal hydrides, aluminium alkyls and halides. Prior to its use the support material may be subjected to treatment at 100°C to 1000°C and preferably at 200 to 850°C in an inert atmosphere.

The porous supports are preferably pretreated with an organometallic compound preferably an organoaluminium compound and most preferably a trialkylaluminium compound in a dilute solvent.

The support material is pretreated with the organometallic compound at a temperature of -20°C to 150°C and preferably at 20°C to 100°C.

A further possible catalyst comprises a metallocene complex which has been treated with polymerisable monomers. Our earlier applications WO 04/020487 and WO 05/019275 describe supported catalyst compositions wherein a polymerisable monomer is used in the catalyst preparation.

Polymerisable monomers suitable for use in the present invention include ethylene, propylene, 1-butene, 1-hexene, 1-octene, 1-decene, styrene, butadiene, and polar monomers for example vinyl acetate, methyl methacrylate, etc. Preferred monomers are those having 2 to 10 carbon atoms in particular ethylene, propylene, 1-butene or 1-hexene.

An alternative catalyst which may be employed to make the compositions of the invention in a Ziegler-Natta catalyst, comprising at least one transition metal. Transition metal is understood to denote a metal from Groups 4, 5 or 6 of the Periodic Table of the Elements (CRC Handbook of Chemistry and Physics, 75th edition, 1994-95). The transition metal is preferably titanium and/or zirconium. Titanium is particularly preferred. In addition to the transition metal the catalyst preferably also contains magnesium.

Ziegler-Natta catalysts are preferably obtained by coprecipitation of at least one transition metal compound and of a magnesium compound by means of a halogenated organoaluminium compound. Such catalysts are known; they have been disclosed particularly in patents US 3901863, US 4929200 and US 4617360 (Solvay). In the process according to the invention, the catalyst is preferably introduced solely into the first polymerization reactor, that is to say that fresh catalyst is not introduced into the subsequent polymerization reactor. The amount of catalyst introduced into the first reactor is generally adjusted so as to obtain an amount of at least 0.5 mg of transition metal per litre of diluent. The amount of catalyst usually does not exceed 100 mg of transition metal per litre of diluent.

The cocatalyst employed is preferably an organoaluminium compound. Non-halogenated organoaluminium compounds of formula $AlR_3$ in which R represents an alkyl group having from 1 to 8 carbon atoms are preferred. Triethylaluminium and triisobutylaluminium are particularly preferred.

A further possible catalyst system which may be used is a "multiple catalyst system", by which is meant a composition, mixture or system including at least two different catalyst compounds, each having the same or a different metal group, including a "dual catalyst," e.g., a bimetallic catalyst. Use of a multiple catalyst system enables the multimodal product to be made in a single reactor. It is preferred that at least one of the catalysts is a metallocene catalyst compound. Each different catalyst compound of the multiple catalyst system may reside on a single support particle, in which case a dual (bimetallic) catalyst is considered to be a supported catalyst. However, the term bimetallic catalyst also broadly includes a system or mixture in which one of the catalysts resides on one collection of support particles, and another catalyst resides on another collection of support particles. Preferably, in that latter instance, the two supported catalysts are introduced to a single reactor, either simultaneously or sequentially, and polymerisation is conducted in the presence of the bimetallic catalyst system, i.e., the two collections of supported catalysts. Alternatively, the multiple catalyst system includes a mixture of unsupported catalysts in slurry form. One catalyst may be used to produce the HMW component, and the other may be used to produce the LMW component. The LMW catalyst is usually more responsive to chain termination reagents, such as hydrogen, than the HMW catalyst.

EXAMPLES

Reagents used

| | |
|---|---|
| TEA | Triethylaluminium |
| TMA | Trimethylaluminium |
| Ionic Compound A | $[N(H)Me(C_{18-22}H_{37-45})_2][B(C_6F_5)_3(p\text{-}OHC_6H_4)]$ |
| Complex A | $(C_5Me_4SiMe_2N^tBu)Ti(\eta^4\text{-}1,3\text{-pentadiene})$ |
| CHEMAX X-997 | Antistatic agent, commercially available from PPC CHEMAX, Inc. |
| Octastat 2000 | Antistatic agent, commercially available from Innospec, Inc |

## Determination of polymer properties

### Melt indexes

Melt indexes are determined according to ISO1 133 and are indicated in g/10min. For polyethylenes a temperature of 190°C is applied. $MI_2$ is determined under a load of 2.16 kg, $MI_5$ is determined under a load of 5 kg and HLMI is determined under a load of 21.6 kg.

### Density

Density of the polyethylene was measured according to ISO 1183-1 (Method A) and the sample plaque was prepared according to ASTM D4703 (Condition C) where it was cooled under pressure at a cooling rate of 15°C/min from 190°C to 40°C. All densities were measured on the unpigmented polyethylene, ie before the addition of any additives or pigments.

### Dynamic Rheological Analysis

Dynamic rheological measurements are carried out, according to ASTM D 4440, on a dynamic rheometer (e.g., ARES) with 25 mm diameter parallel plates in a dynamic mode under an inert atmosphere. For all experiments, the rheometer has been thermally stable at 190°C for at least 30 minutes before inserting the appropriately stabilised (with anti-oxidant additives), compression-moulded sample onto the parallel plates. The plates are then closed with a positive normal force registered on the meter to ensure good contact. After about 5 minutes at 190°C, the plates are lightly compressed and the surplus polymer at the circumference of the plates is trimmed. A further 10 minutes is allowed for thermal stability and for the normal force to decrease back to zero. That is, all measurements are carried out after the samples have been equilibrated at 190°C for about 15 minutes and are run under full nitrogen blanketing.

Two strain sweep (SS) experiments are initially carried out at 190°C to determine the linear viscoelastic strain that would generate a torque signal which is greater than 10% of the lower scale of the transducer, over the full frequency (e.g. 0.01 to 100 rad/s) range. The first SS experiment is carried out with a low applied frequency of 0.1 rad/s. This test is used to determine the sensitivity of the torque at low frequency. The second SS experiment is carried out with a high applied frequency of 100 radls. This is to ensure that the selected applied strain is well within the linear viscoelastic region of the polymer so that the oscillatory rheological measurements do not induce structural changes to the polymer during testing. In addition, a time sweep (TS) experiment is carried out with a low applied frequency of 0.1 rad/s at the selected strain (as determined by the SS experiments) to check the stability of the sample during testing.

### $SHI_{2.7/210}$

The shear thinning index (SHI) is the ratio of the viscosity of the polyethylene base resin at different shear stresses and may serve as a measure of the broadness of the molecular weight distribution as described in EP1909013 patent application. In the present invention, the shear stresses at 2.7 kPa and 210 kPa are used for the determination of the SHI index. Corresponding viscosities values will be denoted $\eta_{2.7kPa}$ for viscosity at a shear stress of 2.7 kPa and $\eta_{210kPa}$ for viscosity at a shear stress of 210 kPa. Additionally, $\eta_{210kPa}$ which is a viscosity at rather high shear stress (or equivalently high shear rates, according to Cox-Merz rule) will be considered as a measure of processability (eg. extrudability) of the resin in the considered pipe extrusion process.

### Flexural modulus

Flexural modulus was determined according to ISO 178. The test specimens had dimensions 80 * 10 * 4 mm (length * width * thickness). They were cut into compression molded plates (prepared according to ISO 293). The flexural

modulus was determined at 23°C. The length of the span between the supports was 64 mm, the test speed was 2 mm/min. The equipment used was an Instron 5544. The reported values are the segment modulus determined between 0.05 and 0.25 % strains and are the average of 7 independent measurements per resin. They are expressed in MPa.

Preparation of pipes

The various polymers were converted into pipes by a standard HOPE extrusion process. 50 mm diameter pipes (Standard Dimension Ratio = 17, which is the ratio of the nominal outside diameter and the nominal wall thickness) were produced using a Krauss Maffei type 1-45-30B extruder (screw diameter 45 mm). Additionally, 110 mm diameter pipes (SDR = 11) were produced on a Battenfeld 1-60-30B type extruder (screw diameter 60 mm).

Process conditions were chosen so as to avoid degradation and oxidation, as is well-known to those skilled in the art. The extrusions were performed with barrier screws, including a grooved feeding section, and a mixing and compression section. Output was kept below 85% of the maximum output of the extruders, so as to ensure good welding between the molten streams at the exit of the extruder head.

The temperature profile was :

| | |
|---|---|
| Feeding area | 50°C |
| Cylinder temperature | 180 - 205 °C |
| Head temperature | 205 - 210 °C |
| Die temperature | 205 - 210 °C |
| Melt temperature | 200 - 220 °C |

A number of identical pipes were made in order to provide multiple samples for testing.

Creep resistance

Creep resistance was evaluated on 50 mm SDR 17 pipes according to ISO 1167.

Notched Pipe Test (NPT)

Stress crack resistance was evaluated through the notched pipe test, performed according to ISO13479 on 110 mm SDR 11 pipes. The test was run at 80°C at a pressure of 9.2 bar.

Three different pipes were tested for each resin.

MRS rating

It can be seen from the table below that all the resins pass the European requirements (EN1555 - EN12201 - ISO4427 - ISO4437) for creep resistance of a PE100 resin (= MRS10 rating): that is - at least 100 hours at 12 MPa, 20°C; at least 165 hours at 5.5 MPa, 80°C without brittle failure; at least 1000 hours at 5 MPa, 80°C.

Extrapolated log stresses vs log failure times in the table below show that pipes made from the resins of the Examples of the invention can withstand a hoop stress of 10 MPa gauge for 50 years at 20°C, and may be rated as MRS10 (= PE100).

For stress crack resistance, all of the resins exceeded considerably the requirements (EN1555 - EN 12201 - ISO4427 - ISO4437) for a PE100 resin, concerning the notch pipe test (> 500 hours at 80°C, 9.2 Bars)

Gel Permeation Chromatography Analysis for Molecular Weight Distribution determination

Apparent molecular weight distribution and associated averages, uncorrected for long chain branching, were determined by Gel Permeation Chromatography using a Waters 150CV, with 4 Waters HMW 6E columns and a differential refractometer detector. The solvent used was 1,2,4 Trichlorobenzene at 135°C, which is stabilised with BHT, of 0.2g/litre concentration and filtered with a 0.45μm Osmonics Inc. silver filter. Polymer solutions of 1.0 g/litre concentration were prepared at 160°C for one hour with stirring only at the last 30 minutes. The nominal injection volume was set at 400μl and the nominal flow rate was 1 ml/min.

A relative calibration was constructed using 13 narrow molecular weight linear polystyrene standards:

| PS Standard | Molecular Weight |
|---|---|
| 1 | 7 520 000 |
| 2 | 4 290 000 |
| 3 | 2 630 000 |
| 4 | 1 270 000 |
| 5 | 706 000 |
| 6 | 355 000 |
| 7 | 190 000 |
| 8 | 114 000 |
| 9 | 43700 |
| 10 | 18 600 |
| 11 | 10 900 |
| 12 | 6 520 |
| 13 | 2 950 |

The elution volume, V, was recorded for each PS standards. The PS molecular weight was then converted to PE equivalent using the following Mark Houwink parameters $k_{ps} = 1.21 \times 10^{-4}$, $\alpha_{ps} = 0.707$, $k_{pe} = 3.92x\ 10^{-4}$, $\alpha_{pe} = 0.725$. The calibration curve $Mw_{PE} = f(V)$ was then fitted with a first order linear equation. All the calculations are done with Millennium 3.2 software from Waters.

The very low molecular weight fractions (below 1000 Daltons) were routinely excluded in the calculation of number average molecular weight, Mn, and hence the polymer polydispersity, Mw/Mn, in order to improve integration at the low end of the molecular weight curve, leading to a better reproducibility and repeatability in the extraction and calculation these parameters.

Catalyst synthesis

Catalyst A

To 9.0kg of silica ES70X (available from PQ Corporation), previously calcined at 400°C for 5 hours, in 90 litres of hexane was added 17.03kg of 0.5 mol Al/litre of TEA in hexane. After 1 hours stirring at 30°C the silica was allowed to settle and the supernatant was removed by decantation. The residue was then washed six times with 130 litres hexane and reslurried in 130 litres hexane.

8.68kg of a toluene solution of Ionic Compound A (9.63 %wt) were cooled to 9°C and 300 g of a hexane solution of TMA (10 %wt) were added over 10 mins. After stirring for a further 15 mins at 9°C, the solution was transferred to the slurry containing the TEA-treated silica from the previous step over a period of 80 mins. The resulting mixture was well agitated for 30 mins at 20°C. Then 2.59kg of a heptane solution of Complex A (9.31 % wt) were added over a period of 15 minutes and the mixture was well agitated for another 2.5 hours at 20°C. Then the slurry was allowed to settle and the supernatant was removed by decantation. The residue was then washed three times with 150 litres hexane and dried in vacuum at 45°C until a free flowing green powder was obtained

[Al]= 1.16 mmol/g

[Ti]= 35 µmol/g

Catalyst B

To 9.8kg of silica ES757 (available from PQ Corporation), previously calcined at 400°C for 5 hours, in 90 litres of hexane was added 20.37kg of 0.5 mol Al/litre of TEA in hexane. After 1 hour stirring at 30°C the silica was allowed to settle and the supernatant liquid was removed by decantation. The residue was then washed five times with 130 litres hexane and reslurried in 130 litres hexane. Then 1 litre of a solution of an Octastat 2000 solution in pentane (2g/l) was

added and the slurry was stirred for 15 mins.

8.78kg of a toluene solution of Ionic Compound A (10.94%wt) were cooled to 5°C and 584mL of a hexane solution of TMA (1 mol/L) were added over 10 mins. After stirring for a further 20 mins at 5°C, the solution was transferred to the slurry containing the TEA-treated silica from the previous step over a period of 80 mins. The resulting mixture was well agitated for 3.25 mins at 20°C. Then 2.85kg of a heptane solution of Complex A (9.51%wt) were added over a period of 30 minutes and the mixture was well agitated for another 3 hours at 20°C. Then the slurry was allowed to settle and the supernatant was removed by decantation. The residue was then washed three times with 150 litres hexane and dried in vacuum at 45°C until a free flowing green powder was obtained.

$$[Al] = 1.09\ mmol/g$$

$$[Ti] = 45\ \mu mol/g$$

<u>Preparation of the Polyethylene resin</u>

The manufacture of a composition according to the invention was carried out in suspension in isobutane in a multistage reaction in two loop reactors of volume 200L and 300L respectively, and in Examples 2 and 3 also including a prepolymerisation in isobutane in a 40L loop reactor. The reactors were connected in series, the slurry from the prepolymerisation reactor was transferred directly to the first loop reactor. The second loop reactor was separated from the first loop reactor by a device making it possible to continuously carry out a reduction in pressure.

Isobutane, ethylene, hydrogen, TiBAl (10ppm) and the catalyst prepared in as described above were continuously introduced into the prepolymerisation reactor and the polymerisation of ethylene was carried out in this mixture in order to form the prepolymer (P). The mixture, additionally comprising the prepolymer (P), was continuously withdrawn from the said prepolymerisation reactor and introduced into the first reactor. In the absence of a prepolymerisation step, the catalyst was fed directly to the first loop reactor. Additional isobutane, ethylene, hydrogen TiBAl (10ppm) as well as 1-hexene were continuously introduced into the first loop reactor and the copolymerization of ethylene and 1-hexene was carried out in this mixture in order to obtain a first ethylene/1-hexene copolymer (A). The mixture, additionally comprising the first polymer (A) was continuously withdrawn from said first reactor and subjected to a reduction in pressure (~45°C, 6.0 bar), so as to remove at least a portion of the hydrogen. The resulting mixture, at least partially degassed of hydrogen, was then continuously introduced into a second polymerisation reactor, at the same time as ethylene, 1-hexene, isobutane and hydrogen, and the copolymerisation of ethylene and 1-hexene was carried out therein in order to form the ethylene/1-hexene copolymer (B). The suspension containing the polymer composition was continuously withdrawn from the second reactor and this suspension was subjected to a final reduction in pressure, so as to flash off the isobutane and the reactants present (ethylene, 1-hexene and hydrogen) and to recover the composition in the form of a dry powder, which was subsequently further degassed to remove residual hydrocarbons. The other polymerisation conditions and copolymer properties are specified in Table 1.

Additive packages incorporated with the resins in the Table below during compounding were as follows:

Example 1 -

Irganox 1010: 1 g/kg
Calcium Stearate: 1 g/kg
Irgafos 168: 1 g/kg
Zinc Stearate: 1 g/kg

Examples 2 and 3 -

Irganox 1010: 2 g/kg
Calcium Stearate: 2 g/kg
Irgafos 168: 1 g/kg

**TABLE 1**

| EXAMPLE | 1 | 2 (comp) | 3 |
|---|---|---|---|
| Prepolymerisation reactor | | | |
| Catalyst | A | B | B |
| Isobutane (L/h) | -- | 72 | 77 |
| $C_2$ (kg/h) | -- | 0.8 | 0.8 |
| $H_2$ (g/h) | -- | 0.6 | 0.4 |
| T (°C) | -- | 23.3 | 25.6 |
| Residence time (h) | -- | 0.56 | 0.52 |
| Prepolymer P fraction (% wt) | -- | 2 | 2 |
| Reactor 1 | | | |
| Isobutane (L/h) | 126 | 122 | 127 |
| $C_2$ (kg/h) | 22.0 | 20.4 | 20.8 |
| 1-hexene (kg/h) | 0.1 | -- | 0.2 |
| $H_2$ (g/h) | 14.0 | 13.9 | 11.0 |
| CHEMAX (ppm) | -- | 8.7 | 7.2 |
| T (°C) | 65 | 70 | 70 |
| Pressure (bar) | 37.4 | 37.2 | 37.9 |
| Residence time (h) | 1.26 | 1.28 | 1.23 |
| Polymer A fraction p1 (% wt) | 50 | 49 | 49.5 |
| Polymer properties reactor 1 | | | |
| $MI_2$ [8/2] (g/10 min) | 445 | 300 | 410 |
| Mw (kDa) | 20 | 25 | 21 |
| Density (kg/m$^3$) | 970 | 972 | 965 |
| Comonomer content (wt% - by NMR) | 0.5 | 0 | |
| Reactor 2 | | | |
| Isobutane (L/h) | 212 | 189 | 199 |
| $C_2$ (kg/h) | 23.5 | 22.8 | 23.6 |
| 1-hexene (kg/h) | 0.3 | 2.4 | 1.3 |
| $H_2$ (g/h) | 0.4 | 0.8 | 0.7 |
| CHEMAX (ppm) | -- | 7.5 | 8.2 |
| T (°C) | 80 | 80 | 80 |
| Pressure (bar) | 34.5 | 37.2 | 37.3 |
| Residence time (h) | 1.05 | 1.16 | 1.11 |
| Polymer B fraction (% wt) | 50 | 49 | 48.5 |
| Properties copolymer composition | | | |
| Productivity (g PE/g catalyst) | 1441 | 1769 | 2347 |
| $MI_5$ (g/10 min) | 0.25 | 0.28 | 0.30 |

(continued)

| Properties copolymer composition | | | |
|---|---|---|---|
| HLMI (g/10 min) | 7.4 | 7.9 | 7.2 |
| Density ($kg/m^3$) | 949 | 943.3 | 943.8 |
| Comonomer content (wt%) | 1 | 2.7 | 1.4 |
| $SHI_{2.7/210}$ | 18.7 | 19 | 19.2 |
| $\eta_{210kPa}$ (kPa.s) | 5.40 | 4.74 | 4.30 |
| $\eta_{2.7kPa}$ (kPa.s) | 101 | 90 | 82 |
| Flexural Modulus (MPa) | 1229 | 1028 | 1106 |
| Pipe pressure testing | | | |
| Rupture time 20°C, 12.4MPa [h] | 2828 | 65 | 167 |
| Rupture time 20°C, 12.1MPa [h] | > 8700 | 64 | 719 |
| Rupture time 20°C, 11.8MPa [h] | > 6000 | 237 | > 6000 |
| Rupture time 80°C, 5.5MPa [h] | > 9400 | 268 | >9400 |
| Rupture time 80°C, 5.2MPa [h] | | >1000 | |
| Notch Pipe Test 80°C, 9.2bar [h] | | > 9500 | > 9500 |
| MRS rating | 10 | | 10 |

**Claims**

**1.** Polyethylene composition comprising

(a) 40-55wt% of a copolymer fraction (A) having a density of 960 - 975 $kg/m^3$ and comprising ethylene and a $C_4$-$C_{10}$ alpha-olefin,
(b) 45-60wt% of a copolymer fraction (B) comprising ethylene and a $C_4$-$C_{10}$ alpha-olefin,
wherein the composition has an unpigmented density of 942 to 954 $kg/m^3$ and an $MI_5$ of 0.1 to 1 g/10 min,
wherein the composition has a substantially uniform or reverse comonomer distribution in one or both of fractions (A) and (B).

**2.** Composition according to claim 1, wherein copolymer fraction (A) has an $MI_2$ of from greater than 300 to 800 g/10min, and/or a weight average molecular weight Mw of from 15 to 35 kDa.

**3.** Composition according to any preceding claim, which comprises 45-55wt% of ethylene copolymer fraction (A) and 45-55wt% of ethylene copolymer fraction (B).

**4.** Composition according to any preceding claim, which has an unpigmented density of 943 to 952 $kg/m^3$.

**5.** Composition according to any preceding claim, which has an $\eta_{210kPa}$ of less than 6 kPa. s.

**6.** Composition according to any preceding claim, wherein both copolymer (A) and copolymer (B) both independently contain between 0.3 and 1 mol% of alpha-olefin.

**7.** Composition according to any preceding claim, wherein the comonomer in both copolymer (A) and copolymer (B) is independently 1-butene, 1-hexene or 1-octene.

**8.** Composition according to claim 3, wherein copolymer (A) and copolymer (B) both contain the same comonomer.

**9.** Composition according to any preceding claim, wherein copolymer (A) has an $MI_2$ of at least 320 g/10 min, preferably

320-500 g/10min.

**10.** Composition according to any preceding claim, which has an $MI_5$ of 0.2 to 0.7 g/10 min.

**11.** Composition according to any preceding claim, which additionally contains up to 10wt%, preferably up to 5wt% of a prepolymer.

**12.** Composition according to any preceding claim, which has a flexural modulus of less than 1400 MPa, and/or a flexural modulus in MPa of less than 25(D-900) where D is density in $kg/m^3$.

**13.** Composition according to any preceding claim, which has a long term hydrostatic strength (LTHS) rating of 10.5 or better.

**14.** Composition according to any preceding claim, which has a notch pipe test result, performed according to ISO 13479:1997 on 110 mm SDR 11 pipes at 80°C/9.2 bar, of 1000 hours or better, preferably 1 year (8760 hours) or better.

**15.** Composition according to any preceding claim made using a metallocene catalyst system.

## Patentansprüche

**1.** Polyethylenzusammensetzung, umfassend

(a) 40-55 Gew.-% einer Copolymerfraktion (A) mit einer Dichte von 960-975 $kg/m^3$, die Ethylen und ein $C_4$-$C_{10}$-alpha-Olefin umfasst,
(b) 45-60 Gew.-% einer Copolymerfraktion (B), die Ethylen und ein $C_4$-$C_{10}$-alpha-Olefin umfasst,
wobei die Zusammensetzung eine unpigmentierte Dichte von 942 bis 954 $kg/m^3$ und einen $MI_5$ von 0,1 bis 1 g/10 min aufweist,
wobei die Zusammensetzung eine im Wesentlichen gleichmäßige oder umgekehrte Comonomerverteilung in einer oder beiden der Fraktionen (A) und (B) aufweist.

**2.** Zusammensetzung nach Anspruch 1, wobei die Copolymerfraktion (A) einen $MI_2$ von größer als 300 bis 800 g/10 min und/oder ein gewichtsmittleres Molekulargewicht Mw von 15 bis 35 kDa aufweist.

**3.** Zusammensetzung nach einem der vorhergehenden Ansprüche, die 45-55 Gew.-% der Ethylencopolymerfraktion (A) und 45-55 Gew.-% der Ethylencopolymerfraktion (B) umfasst.

**4.** Zusammensetzung nach einem der vorhergehenden Ansprüche, die eine unpigmentierte Dichte von 943 bis 952 $kg/m^3$ aufweist.

**5.** Zusammensetzung nach einem der vorhergehenden Ansprüche, die eine $\eta_{210\ kPa}$ von weniger als 6 kPa.s aufweist.

**6.** Zusammensetzung nach einem der vorhergehenden Ansprüche, wobei sowohl das Copolymer (A) als auch das Copolymer (B) jeweils unabhängig zwischen 0,3 und 1 Mol-% alpha-Olefin enthalten.

**7.** Zusammensetzung nach einem der vorhergehenden Ansprüche, wobei das Comonomer sowohl in dem Copolymer (A) als auch in dem Copolymer (B) unabhängig 1-Buten, 1-Hexen oder 1-Octen ist.

**8.** Zusammensetzung nach Anspruch 3, wobei Copolymer (A) und Copolymer (B) jeweils das gleiche Comonomer enthalten.

**9.** Zusammensetzung nach einem der vorhergehenden Ansprüche, wobei das Copolymer (A) einen $MI_2$ von mindestens 320 g/10 min, vorzugsweise 320-500 g/10 min aufweist.

**10.** Zusammensetzung nach einem der vorhergehenden Ansprüche, die einen $MI_5$ von 0,2 bis 0,7 g/10 min aufweist.

**11.** Zusammensetzung nach einem der vorhergehenden Ansprüche, die zusätzlich bis zu 10 Gew.-%, vorzugsweise bis zu 5 Gew.-% eines Präpolymers enthält.

**12.** Zusammensetzung nach einem der vorhergehenden Ansprüche, die einen Biegemodul von weniger als 1400 MPa und/oder einen Biegemodul in MPa von weniger als 25 (D-900) aufweist, wobei D die Dichte in kg/$m^3$ ist.

**13.** Zusammensetzung nach einem der vorhergehenden Ansprüche, die einen Nennwert der langfristigen hydrostatischen Festigkeit (LTHS) von 10,5 oder besser aufweist.

**14.** Zusammensetzung nach einem der vorhergehenden Ansprüche, die ein Kerbrohrtestergebnis, durchgeführt gemäß ISO 13479:1997 an 110 mm SDR 11-Rohren bei 80 °C/9,2 bar, von 1000 Stunden oder besser, vorzugsweise 1 Jahr (8760 Stunden) oder besser aufweist.

**15.** Zusammensetzung nach einem der vorhergehenden Ansprüche, hergestellt unter Verwendung eines Metallocen-Katalysatorsystems.

## Revendications

**1.** Composition de polyéthylène comprenant

(a) 40 à 55 % en poids d'une fraction constituée d'un copolymère (A) ayant une densité de 960 à 975 kg/$m^3$ et comprenant de l'éthylène et une alpha-oléfine en $C_4$ à $C_{10}$,
(b) 45 à 60 % en poids d'une fraction constituée d'un copolymère (B) comprenant de l'éthylène et une alpha-oléfine en $C_4$ à $C_{10}$,
dans laquelle la composition présente une densité sans pigment de 942 à 954 kg/$m^3$ et un MIs de 0,1 à 1 g/10 min,
dans laquelle la composition présente une répartition de comonomères sensiblement uniforme ou inverse dans l'une ou les deux fractions (A) et (B).

**2.** Composition selon la revendication 1, dans laquelle la fraction constituée d'un copolymère (A) présente un $MI_2$ de plus de 300 à 800 g/10 min, et/ou un poids moléculaire moyen en poids Mw de 15 à 35 kDa.

**3.** Composition selon une quelconque revendication précédente, qui comprend 45 à 55 % en poids de fraction constituée d'un copolymère d'éthylène (A) et 45 à 55 % en poids de fraction constituée d'un copolymère d'éthylène (B).

**4.** Composition selon une quelconque revendication précédente, qui présente une densité sans pigment de 943 à 952 kg/$m^3$.

**5.** Composition selon une quelconque revendication précédente, qui présente une viscosité $\eta_{210kPa}$ inférieure à 6 kPa.s.

**6.** Composition selon une quelconque revendication précédente, dans laquelle le copolymère (A) et le copolymère (B) contiennent tous deux indépendamment entre 0,3 et 1 % en moles d'alpha-oléfine.

**7.** Composition selon une quelconque revendication précédente, dans laquelle le comonomère tant dans le copolymère (A) que dans le copolymère (B) est indépendamment le 1-butène, le 1-hexène ou le 1-octène.

**8.** Composition selon la revendication 3, dans laquelle le copolymère (A) et le copolymère (B) contiennent tous deux le même comonomère.

**9.** Composition selon une quelconque revendication précédente, dans laquelle le copolymère (A) présente un $MI_2$ d'au moins 320 g/10 min, de préférence de 320 à 500 g/10 min.

**10.** Composition selon une quelconque revendication précédente, qui présente un $MI_5$ de 0,2 à 0,7 g/10 min.

**11.** Composition selon une quelconque revendication précédente, qui contient en outre jusqu'à 10 % en poids, de préférence jusqu'à 5 % en poids d'un prépolymère.

**12.** Composition selon une quelconque revendication précédente, qui présente un module de flexion inférieur à 1 400 MPa, et/ou un module de flexion en MPa inférieur à 25 (D-900), où D est la densité en kg/$m^3$.

**13.** Composition selon une quelconque revendication précédente, qui présente un niveau de résistance hydrostatique

à long terme (LTHS) de 10,5 ou mieux.

**14.** Composition selon une quelconque revendication précédente, qui présente un résultat d'essai de tube encoché, réalisé selon la norme ISO13479:1997 sur des tubes SDR 11 de 110 mm à 80 °C/9,2 bar, de 1 000 heures ou mieux, de préférence 1 an (8 760 heures) ou mieux.

**15.** Composition selon une quelconque revendication précédente, préparée en utilisant un système catalyseur métallocène.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 0234829 A
- EP 0739937 A
- WO 02102891 A
- EP 1909013 A
- WO 2006022918 A
- EP 898585 A
- EP 416815 A
- EP 418044 A
- EP 420436 A
- EP 551277 A
- WO 2006085051 A
- WO 2008074689 A
- WO 9500526 A
- WO 9827119 A
- WO 9928353 A
- WO 04020487 A
- WO 05019275 A
- US 3901863 A
- US 4929200 A
- US 4617360 A, Solvay


### Non-patent literature cited in the description


- Prediction of melt flow rate (MFR) of bimodal polyethylenes based on MFR of their components. *Bengt Hagström, Conference of Polymer Processing in Gothenburg,* 19 August 1997
- **J. C. RANDALL ; JMS-REV.** *Macromol. Chem. Phys.,* 1989, vol. C29 (2&3), 201-317
- **L.J. ROSE et al.** Characterisation of Polyethylene Copolymers by Coupled GPC/FTIR. *Characterisation of Copolymers,* 1995, ISBN 1-85957-048-86
- CRC Handbook of Chemistry and Physics. 1994